# FASCICULE DE BREVET EUROPEEN

(11) **EP 3 416 930 B1**
(45) Date de publication et mention de la délivrance du brevet: **14.10.2020**
(21) Numéro de dépôt: 17709155.0
(22) Date de dépôt: 16.02.2017
(51) Int. Cl.: C04B 41/91, C04B 41/81, F01D 9/04, F01D 25/00, F01D 11/12

(54) **SECTEUR D'ANNEAU DE TURBINE AVEC BARRIÈRE ENVIRONNEMENTALE DOPÉE PAR UN ÉLÉMENT ÉLECTRIQUEMENT CONDUCTEUR**
TURBINENMANTELSEKTOR MIT DURCH EIN ELEKTRISCH LEITFÄHIGES ELEMENT DOTIERTER UMGEBUNGSBARRIERE
TURBINE SHROUD SECTOR WITH ENVIRONMENTAL BARRIER DOPED BY AN ELECTRICALLY CONDUCTIVE ELEMENT

(30) Priorité: 18.02.2016 FR 1651347
(43) Date de publication de la demande: 26.12.2018
(73) Titulaire: Safran Ceramics, 33185 Le Haillan (FR)
(72) Inventeur: CARLIN, Maxime, 33700 Merignac (FR); PIN, Lisa, 33320 Eysines (FR)
(74) Mandataire: Cabinet Beau de Loménie
(86) Numéro de dépôt international: PCT/FR2017/050347
(87) Numéro de publication internationale: WO 2017/140985

(56) Documents cités:
- EP-A1- 2 540 994
- WO-A1-2011/085376
- US-A1- 2006 280 952
- US-A1- 2014 120 308

## Description

### Arrière-plan de l'invention

La présente invention concerne un secteur d'anneau de turbine en matériau composite à matrice céramique, un ensemble d'anneau de turbine, notamment destiné à être utilisé dans une turbomachine, ainsi qu'un procédé de fabrication d'un tel secteur d'anneau.

Dans le cas d'ensembles d'anneau de turbine entièrement métalliques, il est nécessaire de refroidir tous les éléments de l'ensemble et en particulier l'anneau de turbine qui est soumis aux flux les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC) afin de s'affranchir de la mise en œuvre d'un matériau métallique.

Les matériaux CMC présentent de bonnes propriétés mécaniques les rendant aptes à constituer des éléments de structures et conservent avantageusement ces propriétés à températures élevées. La mise en oeuvre de matériaux CMC a avantageusement permis de réduire le flux de refroidissement à imposer lors du fonctionnement et donc à augmenter la performance des turbomachines. En outre, la mise en œuvre de matériaux CMC permet avantageusement de diminuer la masse des turbomachines et de réduire l'effet de dilatation à chaud rencontré avec les pièces métalliques.

Dans les conditions de fonctionnement des turbines aéronautiques, caractérisées notamment par des températures élevées et un environnement corrosif, les matériaux CMC peuvent se dégrader. Pour protéger les parties des secteurs d'anneau exposées aux flux d'air chaud corrosif de la turbine, il est connu de revêtir ces parties d'une barrière environnementale (aussi appelée « EBC » de l'anglais « Environnemental Barrier Coating »). On connait par exemple des barrières environnementales multicouches du type Si/Mullite/BSAS (où BSAS correspond à un aluminosilicate de baryum et de strontium), ou encore celles comprenant une couche de liaison en silicium et une couche d'un silicate de terre rare (par exemple Y₂Si₂O₇). Ces barrières environnementales peuvent être déposées, de façon connue en soi, par des procédés de projection thermique, de dépôt physique en phase vapeur (PVD) ou par des dépôts de barbotines (par exemple par « dip-coating » ou « spray coating »).

Les faces inter-secteurs de chaque secteur d'anneau comprennent généralement des fentes dans lesquelles sont placées des languettes d'étanchéité, qui permettent d'empêcher la fuite de gaz à l'extérieur de la veine d'écoulement de flux gazeux dans la turbine. Ces fentes, qui constituent des formes dites « borgnes », peuvent être formées par des méthodes conventionnelles d'usinage.

Il serait toutefois souhaitable de simplifier la formation de fentes sur les faces inter-secteurs de secteurs d'anneau.

Le document EP 2 540 994 A1 divulgue un secteur d'anneau de turbine de l'état de l'art selon le préambule de la revendication 1.

### Objet et résumé de l'invention

A cet effet, l'invention propose, selon un premier aspect, un secteur d'anneau de turbine en matériau composite à matrice céramique ayant une partie formant base annulaire avec une face interne destinée à définir la face interne d'un anneau de turbine lorsque le secteur d'anneau est monté à une structure de support d'anneau et une face externe à partir de laquelle s'étend une portion d'accrochage du secteur d'anneau à la structure de support d'anneau, le secteur d'anneau comprenant en outre des faces inter-secteurs chacune destinée à être en regard d'un secteur d'anneau voisin lorsque le secteur d'anneau est monté sur la structure de support d'anneau. Conformément à l'invention, les faces inter-secteurs sont revêtues par une barrière environnementale dopée par un composé électriquement conducteur et présentant au moins une fente.

Par « barrière environnementale dopée par un composé électriquement conducteur » on entend que la barrière environnementale comprend au moins une couche dopée par un composé électriquement conducteur et que la teneur en élément électriquement conducteur dans cette couche est suffisante pour rendre cette couche électriquement conductrice tout en étant suffisamment faible pour ne pas affecter significativement les propriétés de la barrière environnementale. Dans certains exemples, la couche dopée peut constituer la couche externe de la barrière environnementale. En variante, la couche dopée peut être revêtue d'une ou plusieurs couches électriquement conductrices, c'est-à-dire comprenant un matériau électriquement conducteur, par exemple une couche comprenant du silicium.

Le dopage de la barrière environnementale par le composé électriquement conducteur confère à cette dernière un caractère conducteur de l'électricité et permet ainsi de former la fente par usinage de la barrière environnementale par un procédé d'électro-érosion, simplifiant ainsi grandement la formation de cette fente par rapport aux méthodes d'usinage conventionnelles.

La fente peut s'étendre sur toute l'épaisseur de la barrière environnementale, ou en variante, s'étendre sur une partie seulement de l'épaisseur de la barrière environnementale. Dans un exemple, la fente peut s'étendre uniquement dans l'épaisseur de la barrière environnementale, et pas dans le matériau CMC sous-jacent. La fente peut également s'étendre dans une couche de liaison éventuellement au contact du matériau composite à matrice céramique du secteur d'anneau, ou encore jusque dans le matériau CMC du secteur d'anneau. Dans un exemple de réalisation, la fente peut être une forme borgne, c'est-à-dire non traversant.

Dans un exemple de réalisation, le composé électriquement conducteur peut être le silicium. Dans un exemple de réalisation, le composé électriquement conducteur peut être un composé carboné électriquement conducteur, par exemple du carbone ou un polymère carboné électriquement conducteur. Dans un exemple de réalisation, le composé électriquement conducteur peut être un composé métallique. Dans un exemple de réalisation, le composé électriquement conducteur peut être le carbure de silicium (SiC).

Dans un exemple de réalisation, la barrière environnementale comprend en outre au moins un silicate de terre rare. Un exemple de silicate de terre rare peut être Y₂Si₂O₇.

Dans ce cas, la barrière environnementale peut comprendre une première couche comprenant le silicate de terre rare dopée par le composé électriquement conducteur et une deuxième couche de liaison, par exemple en silicium, située entre la première couche et le matériau composite à matrice céramique du secteur d'anneau. La deuxième couche de liaison assure notamment l'accrochage de la première couche et permet de protéger le matériau CMC sous-jacent de l'oxydation. De manière générale, on peut choisir le composé électriquement conducteur pour qu'il soit compatible avec le matériau majoritaire formant la couche dopée. Ainsi, l'utilisation de silicium est avantageuse dans le cas où la barrière environnementale comprend une couche dopée d'un silicate de terre rare car il pourra s'oxyder en silice SiO₂ qui est compatible avec le matériau de cette couche.

D'une manière générale, quel que soit le mode de réalisation considéré, la teneur massique en composé électriquement conducteur dans la couche de la barrière environnementale dans laquelle ce composé est présent peut être inférieure ou égale à 35%, par exemple comprise entre 5 % et 35 %.

Dans un exemple de réalisation, la barrière environnementale comprend au moins une couche d'un silicate de terre rare dopée ayant une teneur massique en silicium inférieure ou égale à 35 %, par exemple comprise entre 5 % et 35 %. Dans un exemple de réalisation, la barrière environnementale comprend au moins une couche d'un silicate de terre rare dopée ayant une teneur massique en composé carboné électriquement conducteur inférieure ou égale à 35%, par exemple comprise entre 5 % et 35 %. Dans un exemple de réalisation, la barrière environnementale comprend au moins une couche d'un silicate de terre rare dopée ayant une teneur massique en composé métallique inférieure ou égale à 35 %, par exemple comprise entre 5% et 35%. Dans un exemple de réalisation, la barrière environnementale comprend au moins une couche d'un silicate de terre rare dopée ayant une teneur massique en carbure de silicium (SiC) inférieure ou égale à 35 %, par exemple comprise entre 5% et 35%.

Dans un exemple de réalisation, la barrière environnementale comprend au moins une couche d'un aluminosilicate de baryum et de strontium (BSAS) dopée ayant une teneur massique en silicium inférieure ou égale à 35%, par exemple comprise entre 5 % et 35 %. Dans un exemple de réalisation, la barrière environnementale comprend au moins une couche d'un aluminosilicate de baryum et de strontium dopée ayant une teneur massique en composé carboné électriquement conducteur inférieure ou égale à 35%, par exemple comprise entre 5 % et 35 %. Dans un exemple de réalisation, la barrière environnementale comprend au moins une couche d'un aluminosilicate de baryum et de strontium dopée ayant une teneur massique en composé métallique inférieure ou égale à 35 %, par exemple comprise entre 5% et 35%. Dans un exemple de réalisation, la barrière environnementale comprend au moins une couche d'un aluminosilicate de baryum et de strontium dopée ayant une teneur massique en carbure de silicium (SiC) inférieure ou égale à 35%, par exemple comprise entre 5 % et 35 %.

L'invention vise également un ensemble d'anneau de turbine comprenant une pluralité de secteurs d'anneau formant un anneau de turbine et une structure de support d'anneau, chaque secteur d'anneau étant monté sur la structure de support d'anneau et étant tel que défini ci-dessus, au moins une languette d'étanchéité étant présente dans la fente de la barrière environnementale de chaque secteur d'anneau.

Une turbomachine comprenant un ensemble d'anneau de turbine tel que celui décrit ci-dessus est aussi objet de la présente invention.

Selon un deuxième aspect, l'invention a pour objet un procédé de fabrication d'un secteur d'anneau tel que celui présenté précédemment, le procédé comportant au moins les étapes suivantes :
- formation sur les faces inter-secteurs d'un secteur d'anneau d'une barrière environnementale dopée par un composé électriquement conducteur, et
- formation par électro-érosion d'au moins une fente dans la barrière environnementale ainsi formée.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente un secteur d'anneau de turbine monté sur une structure de support d'anneau,
- les figures 2 à 5 sont des vues en coupe d'une face inter-secteurs d'un secteur d'anneau de turbine au niveau d'une fente selon différents modes de réalisation de l'invention, et
- la figure 6 est un ordinogramme représentant les différentes étapes d'un procédé de fabrication d'un secteur d'anneau de turbine selon un mode de réalisation de l'invention.

### Description détaillée

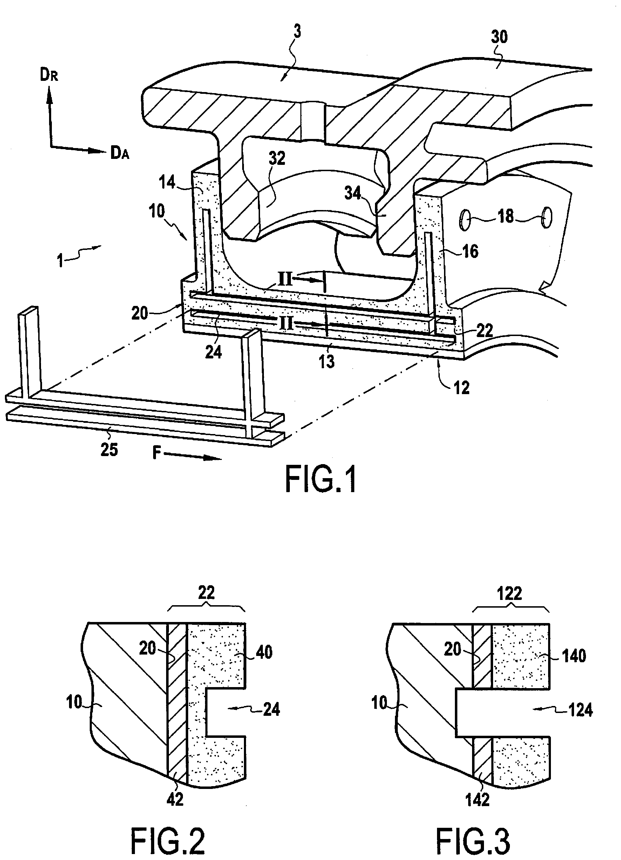

La figure 1 montre un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, la figure 1 montrant un unique secteur d'anneau monté sur la structure de support d'anneau 3. Dans l'exemple illustré, chaque secteur d'anneau 10 présente, en coupe axiale, une section en forme de π. Dans tout l'exposé, les directions axiale (flèche DA) et radiale (flèche DR) sont définies par rapport à l'axe de l'anneau de turbine, correspondant par ailleurs à l'axe longitudinal du moteur.

Chaque secteur d'anneau 10 présente une base annulaire 12 ayant une face interne par rapport à la direction radiale DR et une face externe par rapport à la direction radiale DR. Chaque secteur d'anneau 10 a une section sensiblement en forme de π inversé avec une base annulaire 12 dont la face interne revêtue d'une couche 13 de matériau abradable définit la veine d'écoulement de flux gazeux dans la turbine. Des pattes amont et aval 14, 16 s'étendent à partir de la face externe de la base annulaire 12 dans la direction radiale DR. Les termes "amont" et "aval" sont utilisés ici en référence au sens d'écoulement du flux gazeux dans la turbine (flèche F).

La structure de support d'anneau 3 est ici solidaire d'un carter de turbine 30 et comprend une bride radiale amont annulaire 32 et une bride radiale aval annulaire 34. Les pattes 14, 16 de chaque secteur d'anneau 10 enserrent les brides amont et aval 32, 34 de la structure de support d'anneau 3. Dans l'exemple illustré, des pions 18 sont insérés dans des perçages pratiqués dans les pattes 14, 16 de chaque secteur d'anneau et assurent la fixation de chaque secteur d'anneau 10 sur la structure de support d'anneau 3. A cet effet, des perçages (non visibles sur les figures) peuvent être présents dans les brides 32, 34 de la structure de support d'anneau pour loger les pions 18.

Chaque secteur d'anneau 10 comprend deux faces inter-secteurs 20 destinées à se retrouver en face d'une face inter-secteurs 20 d'un secteur d'anneau 10 voisin. Les faces inter-secteurs 20 sont chacune présentes dans un plan défini par les directions radiale DR et axiale DA. Chaque face inter-secteurs 20 est revêtue d'une barrière environnementale 22 ayant pour but de protéger le matériau CMC du secteur d'anneau 10 des températures élevées et des gaz corrosifs de la veine. Cette barrière environnementale 22 est pourvue de fentes 24 ou rainures destinées à accueillir des languettes d'étanchéité 25 qui, lorsque tous les secteurs d'anneau 10 sont assemblés pour former l'anneau de turbine 1, permettent d'empêcher les gaz de s'échapper de la veine d'écoulement de flux gazeux entre les secteurs d'anneau 10. Les fentes 24 sont des formes borgnes, c'est-à-dire sont non traversantes.

La figure 2 montre une vue en coupe selon un plan radial du secteur d'anneau 10 au niveau d'une face inter-secteurs 20 et plus précisément au niveau d'une fente 24. Dans cet exemple, la barrière environnementale 22 est constituée d'une première couche 40 dopée par le composé électriquement conducteur et d'une deuxième couche de liaison 42. La couche de liaison 42 est directement au contact de la face inter-secteurs 20 du secteur d'anneau 10 d'une part, et directement au contact de la première couche 40 d'autre part. La première couche 40 est ici une couche externe de la barrière environnementale 22, c'est-à-dire qu'elle n'est pas recouverte par une autre couche de matériau. La fente 24 est ici réalisée uniquement au sein de la première couche 40, c'est-à-dire qu'elle ne s'étend pas dans la deuxième couche de liaison 42, ni dans le matériau CMC 10 sous-jacent.

La première couche 40 peut comprendre majoritairement en masse un silicate de terre rare RE₂Si₂O₇ où RE désigne un élément terre rare, par exemple Y₂Si₂O₇. En variante, la première couche 40 peut comprendre majoritairement en masse un aluminosilicate de baryum et de strontium (BSAS). Quant à la deuxième couche de liaison 42, elle peut par exemple être en silicium. La première couche 40 est dopée par un composé électriquement conducteur. Un tel composé électriquement conducteur peut par exemple être du silicium, du carbure de silicium, du carbone, un polymère carboné électriquement conducteur, ou encore un composé métallique. Grâce aux propriétés de conduction électrique de la première couche 40 de la barrière environnementale 22, la fente 24 peut être réalisée par électro-érosion dans cette première couche 40.

Dans l'exemple de la figure 3, le secteur d'anneau 10 est revêtu d'une barrière environnementale 122 qui comprend, comme précédemment, une première couche 140 dopée par un composé électriquement conducteur et une deuxième couche de liaison 142 située entre la première couche 140 et le matériau CMC du secteur d'anneau 10. La face inter-secteurs 20 comprend également une fente 124 qui peut être réalisée par électro-érosion. A la différence de l'exemple de la figure 2, la fente 124 traverse la totalité de la barrière environnementale 122, c'est-à-dire les première 140 et deuxième 142 couches, et se termine dans le matériau CMC du secteur d'anneau 10.

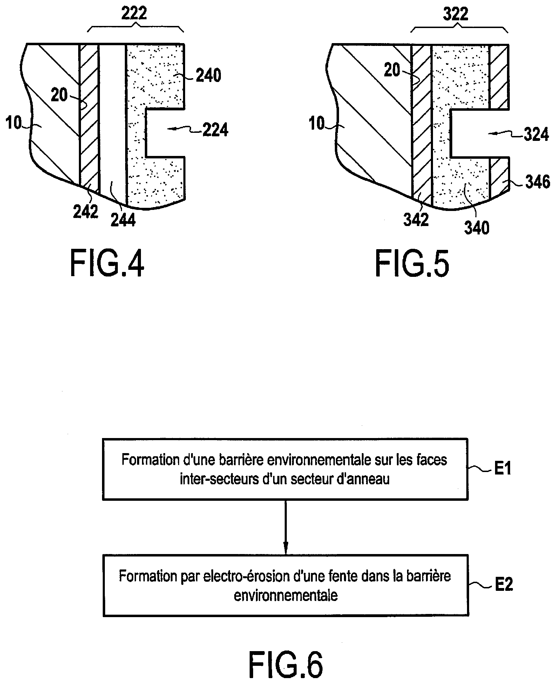

Dans l'exemple de la figure 4, le secteur d'anneau 10 est revêtu d'une barrière environnementale 222 qui comprend : une première couche 240 dopée avec un composé électriquement conducteur, une deuxième couche de liaison 242 directement au contact du matériau CMC de la face inter-secteurs 20 du secteur d'anneau 10 et une troisième couche 244 directement au contact de la deuxième couche de liaison 242 et de la première couche 240. La troisième couche 244 peut comprendre un matériau utilisé usuellement pour une barrière environnementale, par exemple un silicate de terre rare ou un aluminosilicate de baryum et de strontium (BSAS) comme pour la première couche 240, à la différence qu'elle n'est pas nécessairement dopée par un composé électriquement conducteur. Une fente 224 pouvant être usinée par électro-érosion est également présente au sein de la première couche 240 qui est ici une couche externe de la barrière environnementale 222.

Dans l'exemple de la figure 5, le secteur d'anneau 10 est revêtu d'une barrière environnementale 322 qui comprend : une première couche 340 dopée avec un composé électriquement conducteur, une deuxième couche de liaison 342 directement au contact du matériau CMC du secteur d'anneau 10 et de la première couche 340, et une troisième couche 346 au contact de la première couche 340. La troisième couche 346, qui est ici la couche externe de la barrière environnementale 322, est traversée par une fente 324 qui s'étend jusque dans la première couche 324. La fente 324 ne s'étend en revanche ni dans la deuxième couche de liaison 342, ni dans le secteur d'anneau en CMC 10 dans l'exemple illustré. La troisième couche 346 comprend un composé électriquement conducteur, par exemple du silicium, afin de permettre l'usinage par électro-érosion de la fente 324 dans la barrière environnementale 322.

Un procédé de fabrication d'un secteur d'anneau 10 en matériau CMC selon l'invention, comprenant des faces inter-secteurs 20 revêtues d'une barrière environnementale 22, 122, 222, 322, va maintenant être décrit en lien avec l'ordinogramme de la figure 6.

Dans une première étape E1, on peut former une barrière environnementale 22, 122, 222, 322 sur chaque face inter-secteurs 20. Pour ce faire, on peut tout d'abord déposer une couche de liaison 42, 142, 242, 342 directement sur le matériau CMC. Par exemple, la couche de liaison 42, 142, 242, 342 peut être déposée, de façon connue en soi, par projection thermique, par voie liquide (par exemple par « spray coating » ou « dip coating ») ou par dépôt physique en phase vapeur. Comme décrit précédemment, cette couche de liaison peut être à base de silicium.

Puis, on peut déposer la couche 40, 140, 340 dopée avec un composé électriquement conducteur directement sur la couche de liaison 42, 142, 342. Cette couche 40, 140, 340 peut être déposée également par projection thermique d'un mélange de poudres du composé majoritaire de ladite couche et du composé dopant électriquement conducteur. En variante, on peut également la déposer par voie liquide à partir d'un mélange de poudres dans une barbotine (par exemple par « spray coating » ou « dip coating ») ; ou encore par dépôt physique en phase vapeur. Comme décrit précédemment, le composé majoritaire de la couche 40, 140, 340 peut être un silicate de terre rare, ou un aluminosilicate de baryum et de strontium (BSAS), et le composé dopant électriquement conducteur peut être du silicium ou du carbone.

Pour obtenir une barrière environnementale telle que celle illustrée sur la figure 4, on peut, avant de déposer la couche 240 dopée par un composé électriquement conducteur, déposer une couche 244 dépourvue de composé électriquement conducteur, de la même manière que pour les couches 40, 140, 340.

Pour obtenir une barrière environnementale telle que celle illustrée sur la figure 5, on peut, après avoir déposé la couche 340 dopée par un composé électriquement conducteur, déposer une couche 346 à base d'un élément conducteur comme le silicium, par exemple par projection thermique, par voie liquide ou dépôt physique en phase vapeur.

Enfin, dans une dernière étape E2, on peut former ou finaliser la formation de la fente 24, 124, 224, 324 par électro-érosion. Pour ce faire, on peut, de façon connue en soi, immerger la face inter-secteurs 20 dans un liquide adapté et connecter la barrière environnementale 22, 122, 222, 322 à une borne d'un générateur de tension. Une électrode connectée également à l'autre borne du même générateur peut ensuite se déplacer à la surface de la barrière environnementale immergée et, par des impulsions électriques imposées par le générateur, usiner la barrière environnementale pour former la fente 24, 124, 224, 324.

Cette dernière étape E2 est rendue possible par l'invention grâce à la présence d'un composé électriquement conducteur en tant que dopant dans la barrière environnementale. La formation de la fente par électro-érosion permet d'obtenir une précision améliorée dans les dimensions de la fente par rapport à des méthodes d'usinage traditionnelles, et est plus facile à mettre en œuvre que ces dernières.

## Revendications

1. Secteur d'anneau (10) de turbine en matériau composite à matrice céramique ayant une partie formant base annulaire (12) avec une face interne destinée à définir la face interne d'un anneau de turbine (1) lorsque le secteur d'anneau est monté à une structure de support d'anneau (3) et une face externe à partir de laquelle s'étend une portion d'accrochage (14, 16) du secteur d'anneau à la structure de support d'anneau (3), le secteur d'anneau (10) comprenant en outre des faces inter-secteurs (20) chacune destinée à être en regard d'un secteur d'anneau voisin lorsque le secteur d'anneau (10) est monté sur la structure de support d'anneau (3),
**caractérisé en ce que** les faces inter-secteurs (20) sont revêtues par une barrière environnementale (22 ; 122 ; 222 ; 322) dopée par un composé électriquement conducteur et présentant au moins une fente (24 ; 124 ; 224 ; 324).

2. Secteur d'anneau selon la revendication 1, dans lequel la fente (24 ; 124 ; 224 ; 324) est une forme borgne.

3. Secteur d'anneau selon l'une quelconque des revendications 1 et 2, dans lequel le composé électriquement conducteur est le silicium.

4. Secteur d'anneau selon l'une quelconque des revendications 1 et 2, dans lequel le composé électriquement conducteur est un composé carboné électriquement conducteur.

5. Secteur d'anneau selon l'une quelconque des revendications 1 et 2, dans lequel le composé électriquement conducteur est un composé métallique.

6. Secteur d'anneau selon l'une quelconque des revendications 1 et 2, dans lequel le composé électriquement conducteur est le carbure de silicium

7. Secteur d'anneau selon l'une quelconque des revendications 1 à 6, dans lequel la barrière environnementale (22 ; 122 ; 222 ; 322) comprend en outre au moins un silicate de terre rare.

8. Secteur d'anneau selon la revendication 7, dans lequel la barrière environnementale (22 ; 122 ; 222 ; 322) comprend une première couche (40 ; 140 ; 240 ; 340) comprenant le silicate de terre rare dopée par le composé électriquement conducteur et une deuxième couche de liaison (42 ; 142 ; 242 ; 342) située entre la première couche et le matériau composite à matrice céramique du secteur d'anneau (10).

9. Secteur d'anneau selon l'une quelconque des revendications 1 à 8, dans lequel la teneur massique en composé électriquement conducteur dans la couche de la barrière environnementale dans laquelle ce composé est présent est comprise entre 5 % et 35 %.

10. Ensemble d'anneau de turbine comprenant une pluralité de secteurs d'anneau (10) formant un anneau de turbine (1) et une structure de support d'anneau (3), chaque secteur d'anneau (10) étant monté sur la structure de support d'anneau (3) et étant tel que défini dans l'une quelconque des revendications 1 à 9, au moins une languette d'étanchéité (25) étant présente dans la fente (24 ; 124 ; 224 ; 324) de la barrière environnementale de chaque secteur d'anneau.

11. Turbomachine comprenant un ensemble d'anneau de turbine selon la revendication 10.

12. Procédé de fabrication d'un secteur d'anneau (10) selon l'une quelconque des revendications 1 à 9, le procédé comportant au moins les étapes suivantes :
- formation sur les faces inter-secteurs (20) d'un secteur d'anneau d'une barrière environnementale (22 ; 122 ; 222 ; 322) dopée par un composé électriquement conducteur (étape E1), et
- formation par électro-érosion d'au moins une fente (24 ; 124 ; 224 ; 324) dans la barrière environnementale ainsi formée (étape E2).

## Patentansprüche

1. Turbinenringsektor (10) aus Keramikmatrix-Verbundwerkstoff, der einen eine ringförmige Basis (12) bildenden Teil mit einer Innenseite aufweist, welche dazu bestimmt ist, die Innenseite eines Turbinenrings (1) zu definieren, wenn der Ringsektor an einer Ringtragstruktur (3) angebracht ist, sowie einer Außenseite, von der ausgehend sich ein Abschnitt zum Einhaken (14, 16) des Ringsektors an der Ringtragstruktur (3) erstreckt, wobei der Ringsektor (10) ferner Zwischen-Sektoren-Seiten (20) umfasst, die jeweils dazu bestimmt sind, gegenüber einem benachbarten Ringsektor zu liegen, wenn der Ringsektor (10) an der Ringtragstruktur (3) angebracht ist,
**dadurch gekennzeichnet, dass** die Zwischen-Sektoren-Seiten (20) mit einer Umgebungsbarriere (22; 122; 222; 322) beschichtet sind, die mit einer elektrisch leitenden Verbindung dotiert ist und wenigstens einen Schlitz (24; 124; 224; 324) aufweist.

2. Ringsektor nach Anspruch 1, bei dem der Schlitz (24; 124; 224; 324) eine Blindform ist.

3. Ringsektor nach einem der Ansprüche 1 und 2, bei dem die elektrisch leitende Verbindung Silizium ist.

4. Ringsektor nach einem der Ansprüche 1 und 2, bei dem die elektrisch leitende Verbindung eine elektrisch leitende Kohlenstoffverbindung ist.

5. Ringsektor nach einem der Ansprüche 1 und 2, bei dem die elektrisch leitende Verbindung eine Metallverbindung ist.

6. Ringsektor nach einem der Ansprüche 1 und 2, bei dem die elektrisch leitende Verbindung Siliziumkarbid ist.

7. Ringsektor nach einem der Ansprüche 1 bis 6, bei dem die Umgebungsbarriere (22; 122; 222; 322) ferner wenigstens ein Seltenerdsilikat umfasst.

8. Ringsektor nach Anspruch 7, bei dem die Umgebungsbarriere (22; 122; 222; 322) eine mit der elektrisch leitenden Verbindung dotierte erste Schicht (40; 140; 240; 340), die das Seltenerdsilikat umfasst, sowie eine zweite Verbindungsschicht (42; 142; 242; 342) umfasst, die zwischen der ersten Schicht und dem Keramikmatrix-Verbundwerkstoff des Ringsektors (10) gelegen ist.

9. Ringsektor nach einem der Ansprüche 1 bis 8, bei dem der Massengehalt an elektrisch leitender Verbindung in der Schicht der Umgebungsbarriere, in der diese Verbindung vorliegt, im Bereich zwischen 5 % und 35 % liegt.

10. Turbinenringanordnung, umfassend eine Vielzahl von Ringsektoren (10), welche einen Turbinenring (1) bilden, und eine Ringtragstruktur (3), wobei jeder Ringsektor (10) an der Ringtragstruktur (3) angebracht ist und so ist wie in einem der Ansprüche 1 bis 9 definiert, wobei wenigstens eine Dichtungszunge (25) in dem Schlitz (24; 124; 224; 324) der Umgebungsbarriere eines jeden Ringsektors vorhanden ist.

11. Turbomaschine, umfassend eine Turbinenringanordnung nach Anspruch 10.

12. Verfahren zur Herstellung eines Ringsektors (10) nach einem der Ansprüche 1 bis 9, wobei das Verfahren wenigstens die folgenden Schritte umfasst:
- Ausbilden einer Umgebungsbarriere (22; 122; 222; 322), die mit einer elektrisch leitenden Verbindung dotiert ist, auf den Zwischen-Sektor-Seiten (20) eines Ringsektors (Schritt E1), und
- Ausbilden wenigstens eines Schlitzes (24; 124; 224; 324) in der so ausgebildeten Umgebungsbarriere durch Elektroerosion (Schritt E2).

## Claims

1. A turbine ring sector (10) made of ceramic matrix composite material having a portion forming an annular base (12) with an inner face for defining the inner face of a turbine ring (1) when the ring sector is mounted on a ring support structure (3) and an outer face from which there extends an attachment portion (14, 16) for attaching the ring sector to the ring support structure (3), the ring sector (10) further comprising inter-sector faces (20), each for facing a neighboring ring sector when the ring sector (10) is mounted on the ring support structure (3); the ring sector being **characterized in that** the inter-sector faces (20) are coated in an environmental barrier (22; 122; 222; 322) that is doped with an electrically-conductive compound and that presents at least one slot (24; 124; 224; 324).

2. A ring sector according to claim 1, wherein the slot (24; 124; 224; 324) has a blind shape.

3. A ring sector according to claim 1 or claim 2, wherein the electrically-conductive compound is silicon.

4. A ring sector according to claim 1 or claim 2, wherein the electrically-conductive compound is an electrically-conductive carbon compound.

5. A ring sector according to claim 1 or claim 2, wherein the electrically-conductive compound is a metal compound.

6. A ring sector according to claim 1 or claim 2, wherein the electrically-conductive compound is silicon carbide.

7. A ring sector according to any one of claims 1 to 6, wherein the environmental barrier (22; 122; 222; 322) further comprises at least one rare earth silicate.

8. A ring sector according to claim 7, wherein the environmental barrier (22; 122; 222; 322) comprises a first layer (40; 140; 240; 340) comprising the rare earth silicate doped with the electrically-conductive compound, and a bonding second layer (42; 142; 242; 342) situated between the first layer and the ceramic matrix composite material of the ring sector (10).

9. A ring sector according to any one of claims 1 to 8, wherein the content by weight of electrically-conductive compound in the layer of the environmental barrier in which that compound is present lies in the range 5% to 35%.

10. A turbine ring assembly comprising a ring support structure (3) and a plurality of ring sectors (10) forming a turbine ring (1), each ring sector (10) being mounted on the ring support structure (3) and being as defined according to any one of claims 1 to 9, at least one sealing tongue (25) being present in the slot (24; 124; 224; 324) in the environmental barrier of each ring sector.

11. A turbine engine including a turbine ring assembly according to claim 10.

12. A method of fabricating a ring sector (10) according to any one of claims 1 to 9, the method comprising at least the following steps:
• forming on the inter-sector faces (20) of a ring sector an environmental barrier (22; 122; 222; 322) doped with an electrically-conductive compound (step El); and
• using electrical discharge machining to form at least one slot (24; 124; 224; 324) in the environmental barrier as formed in this way (step E2).
